# EUROPÄISCHE PATENTSCHRIFT

(11) **EP 1 289 730 B1**
(45) Veröffentlichungstag und Bekanntmachung des Hinweises auf die Patenterteilung: **07.04.2004**
(21) Anmeldenummer: 01945159.0
(22) Anmeldetag: 18.05.2001
(51) Int. Cl.: B29C 45/18, B29C 45/17

(54) **VORRICHTUNG UND VERFAHREN ZUR BESCHICKUNG DER PLASTIFIZIEREINHEIT EINER SPRITZGIESSMASCHINE**
DEVICE AND METHOD FOR CHARGING THE PLASTICIZING UNIT OF AN INJECTION-MOULDING MACHINE
DISPOSITIF ET PROCEDE POUR CHARGER L'UNITE DE PLASTIFICATION D'UNE PRESSE D'INJECTION

(30) Priorität: 24.05.2000 DE 10025597
(43) Veröffentlichungstag der Anmeldung: 12.03.2003
(73) Patentinhaber: Krauss-Maffei Kunststofftechnik GmbH, 80997 München (DE)
(72) Erfinder: LIEB, Peter, 78239 Rielasingen-Worblingen (DE)
(86) Internationale Anmeldenummer: PCT/EP2001/005724
(87) Internationale Veröffentlichungsnummer: WO 2001/089796

(56) Entgegenhaltungen:
- EP-A- 0 349 799
- EP-A- 0 483 574
- DE-A- 3 214 597
- DE-U- 8 626 562
- DE-U- 20 003 367
- US-A- 4 862 930
- US-A- 5 513 777
- SCHROEDER K: "QUALITA SISTEMI DI OTTIMIZZAZIONE DELLA QUALITA NELLA LAVORAZIONE DEI MATERIALI PLASTICI TERMOINDURENTI" INTERPLASTICS, TECHNIQUE NUOVE. MILAN, IT, Bd. 15, Nr. 5, 1. September 1992 (1992-09-01), Seiten 102-120, XP000315609 ISSN: 0392-3800
- KLAUS NIEMANN: "Materialzuführung bei feuchtpolyester-Formmassen" PLASTVERARBEITER., Bd. 35, Nr. 6, - Juni 1984 (1984-06) Seiten 40-41, XP002179085 ZECHNER UND HUETHIG VERLAG GMBH. SPEYER/RHEIN., DE ISSN: 0032-1338
- PATENT ABSTRACTS OF JAPAN vol. 013, no. 535 (M-899), 29. November 1989 (1989-11-29) & JP 01 218812 A (MEIKI CO LTD), 1. September 1989 (1989-09-01)
- Datasheet "Kolbenstopfer für Feuchtpolyester", Krauss-Maffei Kunststofftechnik GmbH, september 1999

## Beschreibung

Die Erfindung betrifft eine Vorrichtung zur Beschickung der Plastifiziereinheit einer Spritzgießmaschine, vorzugsweise einen Kolbenstopfer für Feuchtpolyester, gemäß Oberbegriff des Patentanspruchs 1. Die Erfindung betrifft ferner ein mittels dieser Vorrichtung durchgeführtes Verfahren.

Bei den Beschickungsvorrichtungen der im Oberbegriff des Patentanspruchs 1 genannten Art muss bei einem Materialwechsel das im Einfüllstutzen noch vorhandene Restmaterial entfernt werden. Dabei besteht das Problem, dass die Zugänglichkeit zum Einfüllstutzen zu Reinigungszwecken sehr erschwert ist, da der Einfüllstutzen bei gezogenem Stopfkolben nur über den Halteflansch und den Stopfzylinder erreichbar ist. Im weiteren ist die Zugänglichkeit auch dadurch erschwert, dass der Stopfkolben nur im begrenzten Ausmaß aus dem Stopfzylinder herausgefahren werden kann, so dass bereits schon die Zugänglichkeit in das Innere des Stopfzylinders beeinträchtigt ist. Solche Beschickungsvorrichtungen sind beispielsweise aus dem Prospekt "Kolbenstopfer für Feuchtpolyester" der Krauss-Maffei Kunststofftechnik GmbH, 1. Auflage 10/99 bekannt.

Der Erfindung liegt daher die Aufgabe zugrunde, mit einfachen Mitteln und mit geringem Bauaufwand die Zugänglichkeit zum Einfüllstutzen zu verbessern, um bei einem Materialwechsel dessen schnelle und einwandfreie Reinigung durchführen zu können.

Diese Aufgabe wird erfindungsgemäß durch die im Patentanspruch 1 angegebene Vorrichtung und das im Patentanspruch 5 angegebene Verfahren gelöst.

Vorteilhafte Ausgestaltungen der Erfindung sind in den Unteransprüchen angegeben.

Eine Ausführungsform der Erfindung wird anhand der Zeichnung näher erläutert. Es zeigt
- Fig. 1: eine schematische Seitenansicht einer 2-Platten-Spritzgießmaschine mit einer Kolbenstopfvorrichtung zur Zuführung von ballenförmigem Material zur Plastifiziereinheit,
- Fig. 2 und Fig. 3: vergrößerte Einzelheiten an der in Fig. 1 mit A gekennzeichneten Stelle und
- Fig. 4: einen Teilausschnitt aus Fig. 1 mit vom Einfüllstutzen abgehobenen Stopfzylinder.

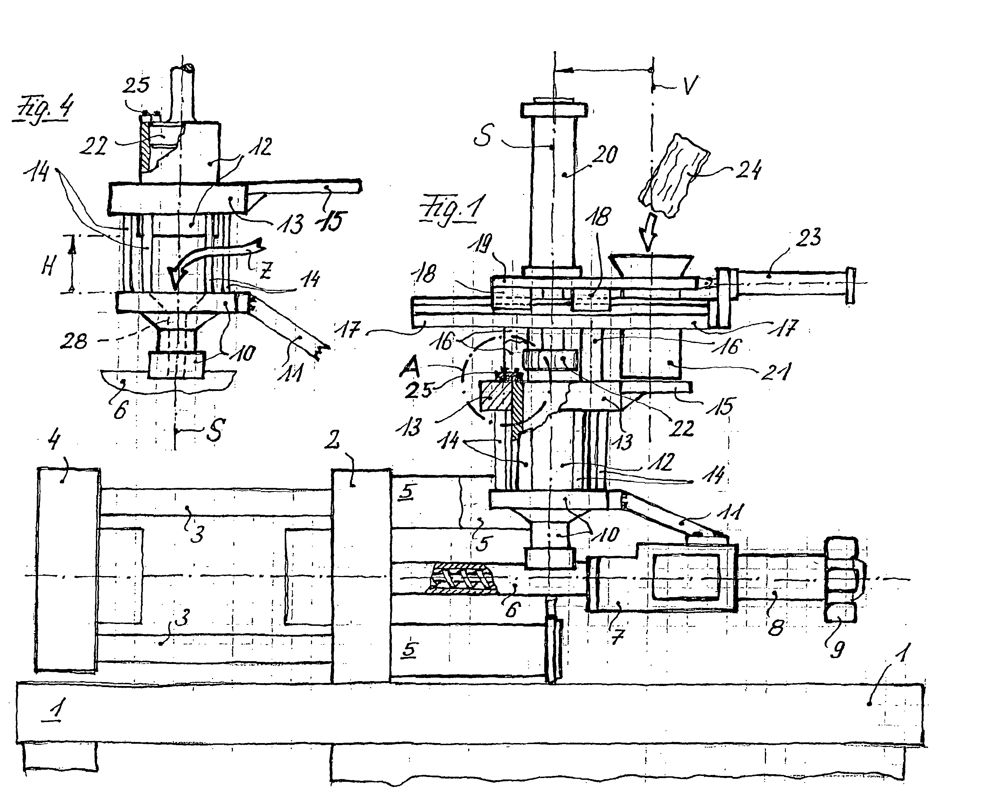

Die Fig. 1 zeigt eine 2-Plattenspritzgießmaschine mit auf einem Maschinenrahmen 1 abgestützter fester Formaufspannplatte 2, die von vier Zugholmen 3 durchsetzt ist, an denen die bewegliche Formaufspannplatte 4 befestigt ist. Die Zugholme 3 werden von den Kolben von vier an der festen Formaufspannplatte 2 befestigten Kolben-Zylindereinheiten 5 bewegt. In der Darstellung nach Fig. 1 ist die vordere obere Kolben-Zylindereinheit 5 nur teilweise dargestellt, um die Ansicht auf die Vorrichtung zur Beschickung der Plastifiziereinheit zu ermöglichen.
Die Plastifiziereinheit besteht aus einem Schneckenzylinder 6 in dem eine Schubschnecke dreh- und reversierbar angeordnet ist. An den Schneckenzylinder 6 schließen sich das Spritzkolbengehäuse 7, der hydraulische Translationsantrieb 8 und der hydraulische Rotationsantrieb 9 an.

Auf dem Schneckenzylinder 6 ist ein Einfüllstutzen 10 angeordnet, der über eine Halterung 11 am Spritzkolbengehäuse 7 abgestützt ist. Der Einfüllstutzen 10 trägt einen Stopfzylinder 12, der mit seinem oberen Ende in einem Halteflansch 13 angeordnet ist. Der Halteflansch 13 ist mittels Befestigungsstangen 14 mit dem Einfüllstutzen 10 verbunden. An den Halteflansch 13 schließt sich eine Abstützplatte 15 an. Über jeweils zwei Tragsäulen 16 sind zwei Verfahrschienen 17 am Halteflansch 13 abgestützt. In der Darstellung nach Fig. 1 sind nur die vordere Verfahrschiene 17 und die beiden vorderen Tragsäulen 16 zu sehen. Da hiervon die linke Tragsäule nur teilweise dargestellt ist, ist die dahinterliegende dritte Tragsäule erkennbar.

Auf den Verfahrschienen 17 ist über Gleitblöcke 18 eine Tragplatte 19 abgestützt, auf der ein Hydraulikzylinder 20 und ein zylindrischer Vorratsbehälter 21 befestigt sind. Der Vorratsbehälter 21 ist an seinem oberen Ende trichterförmig aufgeweitet und steht mit seinem unten offenen Ende in Gleitkontakt mit der Abstützplatte 15. Der Hydraulikzylinder 20 ist mit einem Stopfkolben 22 gekoppelt.

Die Tragplatte 19 ist mit Hilfe eines an den Verfahrschienen 12 befestigten hydraulischen Stellzylinders 23 zusammen mit dem Hydraulikzylinder 20, dem Stopfkolben 22 und dem Vorratsbehälter 21 zwischen zwei Positionen verfahrbar.

In der ersten, in der Zeichnung dargestellten Position, befinden sich der Hydraulikzylinder 20 und der Stopfkolben 22 exakt fluchtend zur Stopfachse S des Stopfzylinders 12 ausgerichtet, in der der Stopfkolben 22 in den Stopfzylinder 12 abgesenkt werden kann.

Zur Erlangung der zweiten, nicht dargestellten Position wird die Tragplatte 19 nach links verschoben, bis die Achse V des Vorratsbehälters 21 genau mit der Stopfachse S des Stopfzylinders 12 fluchtet. Ein vorher in den Vorratsbehälter 21 eingebrachter Materialballen 24 aus beispielsweise Feuchtpolyester rutscht dabei in den Stopfzylinder 12. Nach dem anschließenden Zurückfahren der Tragplatte 19 wird der Stopfkolben 22 wieder exakt fluchtend auf die Stopfachse S ausgerichtet und anschließend unter Druck abgesenkt, so dass das im Stopfzylinder befindliche Material in den Einfüllstutzen 10 gepresst und auf den erforderlichen Stopfdruck verdichtet wird. Der Vorratsbehälter 21 befindet sich dann wieder in einer Position, in der dieser erneut mit einem Materialballen 24 befüllt werden kann.
Bei einem Wechsel von einem Material auf ein anderes Material ist es erforderlich, den im Einfüllstutzen 10 befindlichen und in den Schneckenzylinder 6 führenden Kanal zu reinigen. Hierzu war bislang nur ein Zugang über die obere Öffnung des Stopfzylinders 12 möglich, der zudem noch durch den zurückfahrenden Stopfkolben 22 beengt war. Nach der Erfindung wird vorgeschlagen, den Stopfzylinder 12 mit Einrichtungen zur Kopplung mit dem Stopfkolben 22 zu versehen und den Stopfzylinder 12 mit dem Stopfkolben 22 hochzuziehen, wodurch der Einfüllstutzen 10 für Reinigungszwecke direkt zugänglich wird.

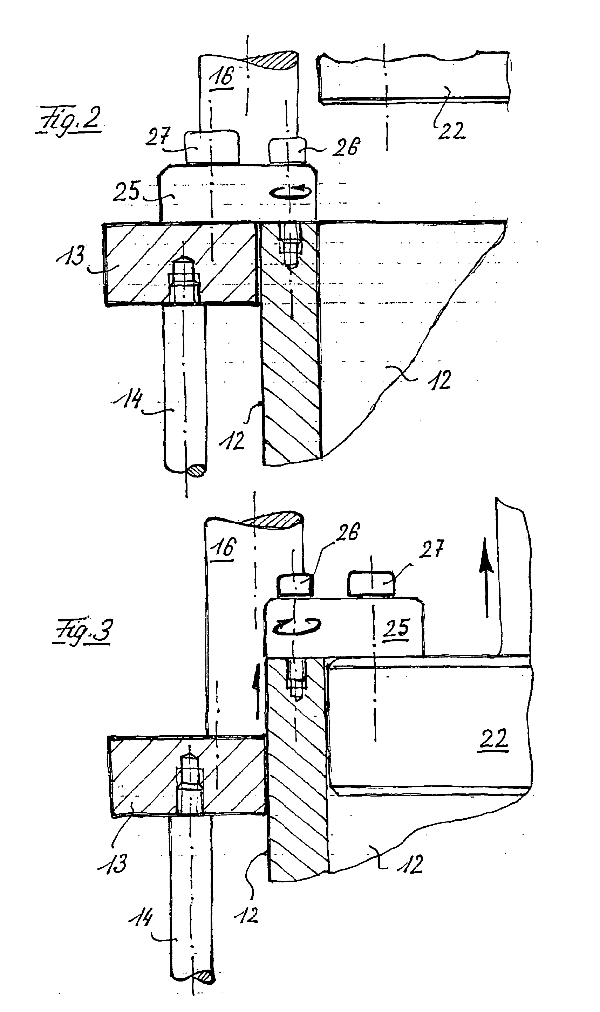

Die Figuren 2 und 3 zeigen Einrichtungen zur Kopplung des Stopfkolbens 22 mit dem Stopfzylinder 12 Hierzu ist am oberen Rand des Stopfzylinders 12 ein Kopplungsstück 25 mittels einer Schraube 26 befestigt, um deren Achse das Kopplungsstück 25 nach einem leichten Lösen der Schraube 26 verschwenkbar ist. In der Darstellung nach Fig. 2 ist das Kopplungsstück 25 mit der einzelnen Schraube 26 im Stopfzylinder 12 und mit zwei Befestigungsschrauben 27 im Halteflansch 13 verschraubt. Zur Kopplung des Stopfkolbens 22 mit dem Stopfzylinder 12 werden die Befestigungsschrauben 27 vom Halteflansch 13 gelöst, das Kopplungsstück 25 wird anschließend um die Achse der leicht gelösten Schraube 26 gedreht und die Befestigungsschrauben 27 werden anschließend in entsprechende Gewindebohrungen in der oberen Fläche des bündig mit der Oberkante des Stopfzylinders 12 abgesenkten Stopfkolbens 22 eingeschraubt.

Wie aus Fig. 3 zu ersehen, kann anschließend der Stopfzylinder 12 mit dem Stopfkolben 22 als eine Baueinheit aus dem Halteflansch 13 herausgezogen werden, wodurch die untere Kante des Stopfzylinders 12 vom Einfüllstutzen 10 abhebt.

Gemäß der Darstellung nach Fig. 4 wird nach einem Hubweg H zwischen der Unterkante des Stopfzylinders 12 und der Oberkante des Einfüllstutzens 10 eine weite und direkte Zugangsöffnung (Pfeil Z) zu dem zu reinigenden Durchgangskanal 28 (Darstellung in unterbrochenen Linien) geschaffen.

### Bezugszeichenliste

- 1: Maschinenrahmen
- 2: Feste Formaufspannplatte
- 3: Zugholme
- 4: Bewegliche Formaufspannplatte
- 5: Kolben-Zylindereinheiten
- 6: Schneckenzylinder
- 7: Spritzkolbengehäuse
- 8: Translationsantrieb
- 9: Rotationsantrieb
- 10: Einfüllstutzen
- 11: Halterung
- 12: Stopfzylinder
- 13: Halteflansch
- 14: Befestigungsstangen
- 15: Abstützplatte
- 16: Tragsäule
- 17: Verfahrschiene
- 18: Gleitblock
- 19: Tragplatte
- 20: Hydraulikzylinder
- 21: Vorratsbehälter
- 22: Stopfkolben
- 23: Hydraul. Stellzylinder
- 24: Materialballen (z.B. Feuchtpolyester)
- 25: Kopplungsstück
- 26: Schraube
- 27: Befestigungsschrauben
- 28: Durchgangskanal

## Patentansprüche

1. Vorrichtung zur Beschickung der Plastifiziereinheit einer Spritzgießmaschine, insbesondere Kolbenstopfer für Feuchtpolyester, mit einem an die Plastifiziereinheit angeschlossenen Einfüllstutzen (10), in dem das untere Ende eines Stopfzylinders (12) gelagert ist, dessen oberes Ende in einem am Einfüllstutzen (10) fest abgestützten Halteflansch (13) gefasst ist, mit im Abstand zum Halteflansch (13) angeordneten Verfahrschienen (17), auf dem ein Stopfkolben (22) mit einer Kolben-Zylindereinheit (20) und ein Vorratsbehälter (21) gemeinsam mittels einer Antriebseinheit wechselweise in Stellungen positionierbar ist, in der einerseits der Stopfkolben (22) fluchtend auf den Stopfzylinder (12) ausgerichtet ist und der Vorratsbehälter (21) sich in einer Nachladestellung befindet und in der andererseits der Nachladebehälter (21) fluchtend auf den Stopfzylinder (12) ausgerichtet ist, **dadurch gekennzeichnet, dass** der Stopfzylinder (12) Einrichtungen zur Kopplung mit dem Stopfkolben (22) aufweist.

2. Vorrichtung nach Anspruch 1, **dadurch gekennzeichnet, dass** die Einrichtungen aus mindestens einem Kopplungsstück (25) bestehen, das schwenkbar am oberen Rand des Stopfzylinders (12) befestigt ist und das wechselweise am Halteflansch (13) und am oberen Rand des Stopfkolbens (12) befestigbar ist.

3. Vorrichtung nach Anspruch 2, **dadurch gekennzeichnet, dass** die Befestigung eines oder mehrerer Kopplungsstücke (25) am Stopfzylinder und am Halteflansch durch Verschraubung erfolgt.

4. Vorrichtung nach Anspruch 2, **dadurch gekennzeichnet, dass** das Kopplungsstück nach Art einer Sperrklinke in einer entsprechenden Ausnehmung im Stopfkolben verriegelbar ist.

5. Verfahren zum Beschicken der Plastifiziereinheit einer Spritzgießmaschine, **dadurch gekennzeichnet, dass** bei einer Vorrichtung gemäß einem der Ansprüche 1 bis 4 der Stopfzylinder (12) zu Reinigungszwecken mit dem Stopfkolben (22) gekoppelt und nach oben gezogen wird und zur Positionierung in die Betriebsstellung nach unten gepresst und vom Stopfkolben (22) entkoppelt wird.

6. Verfahren nach Anspruch 5, **dadurch gekennzeichnet, dass** der Stopfzylinder (12) in der Betriebsstellung mit dem Halterahmen (13) gekoppelt wird.

## Claims

1. An apparatus for charging a plasticising unit of an injection moulding machine, in particular a ram-type compactor for moist polyester, having a feed pipe (10) connected to the plasticising unit in which the lower end of a compaction cylinder (12) is mounted, the upper end of which is contained in a retaining flange (13) securely supported on the feed pipe (10), having displacement rails (17) disposed spaced from the retaining flange (13), on which a compaction ram (22) having a ram-cylinder unit (20) and a storage container (21) can be jointly positioned by means of a drive unit alternately in positions in which firstly the compaction ram (22) is in alignment with the compaction cylinder (12) and the storage container (21) is situated in a reloading position and in which secondly the recharging container (21) is in alignment with the compaction cylinder (12),
**characterised in that** the compaction cylinder (12) comprises devices for coupling with the compaction ram (22).

2. An apparatus according to Claim 1,
**characterised in that** the devices consist of at least one coupling piece (25) which is swivellably attached to the upper edge of the compaction cylinder (12) and which can be alternately attached to the retaining flange (13) and to the upper edge of the compaction ram (12).

3. An apparatus according to Claim 2,
**characterised in that** the attachment of one or more coupling pieces (25) to the compaction cylinder and to the retaining flange is performed by a screw fastening.

4. An apparatus according to Claim 2,
**characterised in that** the coupling piece can be locked in the manner of a detent pawl in a corresponding recess in the compaction ram.

5. A method for charging the plasticising unit of an injection moulding machine,
**characterised in that** with an apparatus according to one of Claims 1 to 4 the compaction cylinder (12) is coupled to the compaction ram (22) for cleaning purposes and is pulled upwards and for positioning into the operating position is pressed downwards and is decoupled from the compaction ram (22).

6. A method according to Claim 5,
**characterised in that** the compaction cylinder (12) is coupled to the retaining frame (13) in the operating position.

## Revendications

1. Dispositif pour le chargement d'une unité de plastification d'une presse d'injection, en particulier d'un dispositif de bourrage à piston pour polyester humide, avec une tubulure de remplissage (10) raccordée à l'unité de plastification dans laquelle est logée l'extrémité inférieure d'un cylindre de bourrage (12) dont l'extrémité supérieure est insérée dans une bride de retenue (13) appuyée fixement sur la tubulure de remplissage (10), avec des rails de déplacement (17) disposés à distance de la bride de retenue (13), sur laquelle un piston de bourrage (22) avec une unité de cylindre de piston (20) et un réservoir de stockage (21) peuvent être positionnés ensemble à l'aide d'une unité d'entraînement alternativement dans des positions dans lesquelles, d'une part, le piston de bourrage (22) est aligné sur le cylindre de bourrage (12) et le réservoir de stockage (21) se trouve dans une position de rechargement et, d'autre part, le réservoir de rechargement (21) est aligné sur le cylindre de bourrage (12), **caractérisé en ce que** le cylindre de bourrage (12) comporte des dispositifs pour l'accouplement avec le piston de bourrage (22).

2. Dispositif selon la revendication 1, **caractérisé** en ce que- les installations comprennent au moins un élément d'accouplement (25) qui est fixé pour pouvoir pivoter au bord supérieur du cylindre de bourrage (12) et qui peut être fixé alternativement à la bride de retenue (13) et au bord supérieur du cylindre de bourrage (12).

3. Dispositif selon la revendication 2, **caractérisé en ce que** la fixation d'un ou de plusieurs éléments d'accouplement (25) se fait par raccord à vis sur le cylindre de bourrage et sur la bride de retenue.

4. Dispositif selon la revendication 2, **caractérisé en ce que** l'élément d'accouplement peut être verrouillé à la manière d'un cliquet d'arrêt dans un logement correspondant dans le piston de bourrage.

5. Procédé pour le chargement de l'unité de plastification d'une presse d'injection, **caractérisé en ce que**, avec un dispositif selon l'une quelconque des revendications 1 à 4, le cylindre de bourrage (12) est accouplé au piston de bourrage (22) et tiré vers le haut à des fins de nettoyage et désaccouplé du piston de bourrage (22) et comprimé vers le bas pour le positionnement dans la position de fonctionnement.

6. Procédé selon la revendication 5, **caractérisé en ce que** le cylindre de bourrage (12) est accouplé au châssis de retenue (13) dans la position de fonctionnement.
